# FASCICULE DE BREVET EUROPEEN

(11) **EP 2 375 299 B1**
(45) Date de publication et mention de la délivrance du brevet: **23.04.2014**
(21) Numéro de dépôt: 11160067.2
(22) Date de dépôt: 28.03.2011
(51) Int. Cl.: G05D 1/00

(54) **Système de gestion de vol d'un aéronef sans pilote à bord de l'aéronef**
Flugsteuerungssystem eines unbemannten Flugzeugs
Flight management system for an unmanned aircraft

(30) Priorité: 06.04.2010 FR 1001408
(43) Date de publication de la demande: 12.10.2011
(73) Titulaire: Thales, 92200 Neuilly Sur Seine (FR)
(72) Inventeur: Marty, Nicolas, 31790, SAINT SAUVEUR (FR); Coulmeau, François, 31840, SEILH (FR); Boone, Xavier, 31500, TOULOUSE (FR)
(74) Mandataire: Esselin, Sophie

(56) Documents cités:
- WO-A1-2004/027732
- FR-A1- 2 913 799
- US-A- 6 154 637
- US-A1- 2006 069 497

## Description

Le domaine de l'invention est celui des systèmes de pilotage des aéronefs sans pilote à bord de l'aéronef. Les aéronefs sans pilotes sont, par exemples, des drones aussi appelés UAV (en référence à l'expression anglosaxonne "*Unmanned Aerial Vehicle*"). On appelle système de drone, l'ensemble formé par un drone et sa station de pilotage reliés par une liaison de communication.

Classiquement un système de gestion de vol d'un aéronef sans pilote à bord comprend au sein de ladite station de contrôle, un ensemble de fonctions de navigation successives et, au sein de l'aéronef, une fonction de commande de l'aéronef à partir de consignes de guidage qui sont des contraintes en roulis, tangage, poussée et vitesse que l'aéronef est supposé devoir respecter. La fonction de commande pilote les équipements aérodynamiques de l'aéronef (gouvernes, moteurs) pour qu'il respecte les consignes de guidage. Ce type de système de gestion de vol est décrit dans le document WO2004/027732.

Dans les systèmes de drones classiques, la réalisation de l'ensemble des fonctions de navigation successives hébergées par la station de contrôle génère les consignes de guidage.

Les drones sont de plus en plus régulièrement amenés à traverser des espaces aériens civils pour rejoindre le théâtre de leur opération, pour des besoins d'entraînement, des besoins de sécurité civile intérieure ou pour des besoins de surveillance (feux de forêt, frontières, manifestations, etc).

Or, pour qu'un aéronef puisse traverser un espace aérien non-ségrégué, il doit y être autorisé. Un espace aérien non ségrégué est un espace qui n'est ni réservé aux applications civiles, ni aux applications militaires mais qui peut accueillir les deux types d'applications, en opposition à un espace aérien ségrégué qui est dédié à une de ses deux applications. L'autorisation de naviguer dans un espace aérien non ségrégué nécessite de démontrer que l'aéronef peut respecter des conditions strictes de sécurité.

L'OACI ("Organisation de l'Aviation Civile Internationale" a ainsi défini le concept de sécurité CNS (pour "Communication / Navigation / Surveillance") qui regroupe par catégories et missions les systèmes et procédures au sol et à bord de l'aéronef permettant d'atteindre les objectifs de sécurité. La communication C représente les échanges entre l'aéronef et les autorités de contrôle aérien ATC (en référence à l'expression anglo-saxonne "Air Traffic Contrel") ou entre un aéronef et sa station de pilotage. La navigation N est relative à la localisation de l'aéronef, (où suis-je ?), la gestion du vol (où dois je aller ?) et au guidage (comment y aller ?). Le volet de la surveillance S est relatif à la détection des conflits à venir vis à vis du relief, des autres aéronefs, ou des conditions météorologiques dangereuses. Une performance est allouée à chacun de ces piliers C, N et S, afin d'obtenir le niveau de sécurité exigé. La démonstration permettant d'obtenir un certificat de navigabilité repose donc sur les performances C/N/S et leurs interactions. En particulier, il faut démontrer que la panne d'une des composantes C, N, S peut être compensée par les autres composantes pour terminer le vol dans des conditions de sécurité suffisantes.

Or, les systèmes de pilotage des drones actuels ne permettent pas de respecter les conditions de sécurité nécessaires à l'insertion dans le trafic civil. Par exemple, en cas de panne de la communication entre la station de pilotage et le drone, ce dernier ne peut pas continuer sa mission avec des conditions de sécurité suffisantes car il est normalement entièrement piloté au sol. Les consignes de guidage sont générées par la réalisation d'un ensemble de fonctions de navigation successives au sein de la station de contrôle. L'aéronef n'est pas capable de générer lui-même des consignes de guidage. Les drones doivent donc respecter des procédures draconiennes pour pouvoir traverser les espaces civils : préavis de plusieurs jours, avions accompagnateurs, fermeture du trafic civil pendant un créneau temporel.

Le but de la présente invention est de proposer un système de gestion de vol d'un aéronef sans pilote à bord, qui lui permette de traverser des espaces aériens ségrégués ou non ségrégués.

A cet effet, l'invention a pour objet un système de gestion de vol d'un aéronef sans pilote à bord relié à une station de contrôle par des moyens de communication, ledit système de gestion de vol comprenant :
- un premier ensemble d'un nombre N de fonctions de navigation successives déportées au sein de la station de contrôle,
- une fonction de commande embarquée à bord de l'aéronef, élaborant, à partir de consignes de guidage, des commandes destinées à commander l'aéronef pour qu'il respecte les consignes de guidage,
- un deuxième ensemble, d'un nombre N de fonctions de navigation successives embarquées à bord de l'aéronef,
- des moyens de configuration aptes à réaliser une combinaison d'un nombre N de fonctions successives, chacune des fonctions successives étant choisie parmi le premier et le deuxième ensemble, ladite combinaison de fonctions successives générant les consignes de guidage transmises à la fonction de commande embarquée.

Dans un mode de réalisation de l'invention, le premier, et respectivement le deuxième, ensembles de fonctions successives comprennent les trois fonctions de navigation successives suivantes :
- une fonction de construction de plan de vol déportée, et respectivement embarquée,
- une fonction de construction d'une trajectoire à venir déportée, et respectivement embarquée,
- une fonction de guidage déportée, et respectivement embarquée.

Avantageusement, le système de gestion de vol comprend une base de données de performances embarquée à bord de l'aéronef et une base de données de performances déportée.

Avantageusement, le système comprend une base de données de navigation déportée et une base de données de navigation embarquée stockant des données de navigation.

Avantageusement, les moyens de configuration du système de vol sont aptes à choisir la provenance des consignes de guidage utilisées par la fonction de gestion de plan de vol appartenant à la combinaison parmi des moyens déportés de communication avec les autorités de contrôle aérien et/ou des moyens embarqués de communication avec les autorités de contrôle aérien et/ou des moyens de génération de consignes de guidage embarqués.

Dans un mode de réalisation, les moyens de configuration du système configurent le système de vol en fonction de performances de navigation requises.

Les performances de navigation requises dépendent avantageusement d'au moins un paramètre de navigation et/ou d'au moins un paramètre de certification et/ou d'au moins un paramètre économique et technique. Les performances de navigation requises sont par exemple prédéterminées. En variante, les performances de navigation requises sont variables pendant une mission de l'aéronef.

Avantageusement, pour au moins un numéro d'ordre i compris entre 1 et N la fonction de navigation déportée de numéro d'ordre i est égale à la fonction embarquée de numéro d'ordre i.

En prévoyant un ensemble de fonctions de navigation successives à la fois au sein de la station de contrôle et à bord de l'aéronef ainsi que des moyens de configuration du système de gestion de vol, l'aéronef peut voler à la fois dans des espaces ségrégués et non ségrégués.

Par ailleurs, les moyens de configuration du système de navigation peuvent réaliser des combinaisons de fonctions de navigation successives choisies parmi les fonctions de navigation embarquées et déportées. Ainsi, on peut choisir d'exécuter à bord de l'aéronef tout ou partie des fonctions de navigation uniquement lorsque cela est nécessaire pour assurer la sécurité de l'aéronef. Cela permet, tout en offrant à un aéronef sans pilote à bord la possibilité de voler dans des espaces civils, de ne pas mobiliser, à bord de l'aéronef, d'énergie superflue pour réaliser des fonctions de navigation lorsque ce n'est pas nécessaire.

ll n'est en outre pas nécessaire de prévoir, à bord de l'aéronef, un calculateur dont la capacité de calcul est dédiée en permanence à l'exécution de l'ensemble des fonctions de navigation. Ainsi, la masse de l'aéronef n'est pas augmentée inutilement par rapport à celle d'un aéronef sans pilote à bord de l'art antérieur. On peut en effet, équiper l'aéronef d'un calculateur qui ne présente pas la capacité de calcul suffisante pour réaliser simultanément les fonctions de mission, les fonctions de navigation successives et les autres fonctions embarquées. Cela est d'autant plus intéressant que plus le niveau d'autonomie nécessaire pour assurer la sécurité de l'aéronef est élevé, plus le nombre de fonctions de mission devant être réalisées diminue (l'aéronef n'a généralement pas à réaliser de fonctions de mission lorsqu'il se trouve sur un espace civil).

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement un exemple d'architecture d'un système de gestion de vol selon l'invention
- les figures 2a à 2e représentent différentes configurations du système de gestion de vol selon l'invention.

D'une figure à l'autre, les mêmes éléments sont repérés par les mêmes références.

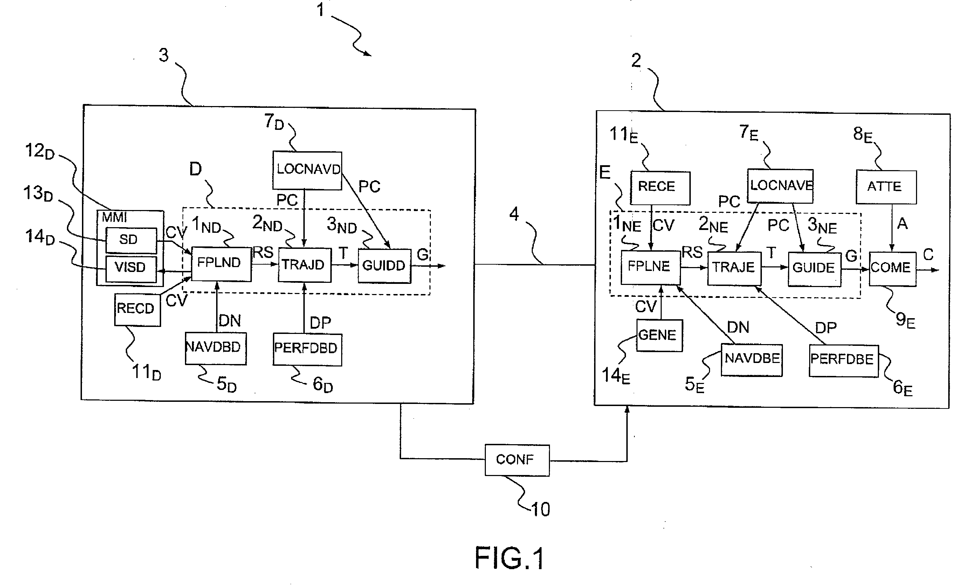

Sur la figure 1, on a représenté un exemple de système 1 de gestion de vol, selon l'invention pour un aéronef 2 sans pilote à bord et relié à une station de contrôle 3 par des moyens de communication 4. Ce système de gestion de vol 1 comprend :
- un premier ensemble D d'un nombre N fonctions de navigation successives i_{ND} de numéro d'ordre i avec i= 1,...N, déportées au sein de la station de contrôle,
- une fonction de commande COME 9_{E} embarquée à bord de l'aéronef, élaborant, à partir de consignes de guidage G, des commandes destinées à commander l'aéronef pour qu'il respecte les consignes de guidage G,
- un deuxième ensemble E, d'un nombre N fonctions de navigation successives i_{ND} de numéro d'ordre i avec i= 1,...N, embarquées à bord de l'aéronef,
- des moyens de configuration CONF 10, du système de gestion de vol 1, aptes à réaliser une combinaison de N fonctions successives, chacune des fonctions successives étant choisie parmi le premier et le deuxième ensemble D, E,
   ladite combinaison de fonctions successives générant les consignes de guidage G qui sont transmises à la fonction de commande embarquée COME.

Autrement dit, les moyens de configuration CONF, 10 réalisent des combinaisons C de N fonctions successives de numéro d'ordre i avec i=1, ...,N. La combinaison C comprend pour chaque numéro d'ordre i, soit la fonction de navigation embarquée i_{NE} d'indice i, soit la fonction de navigation déportée i_{ND} d'indice i. Une fonction présentant un premier numéro d'ordre est réalisée avant la fonction présentant le numéro d'ordre supérieur au premier numéro d'ordre.

Sur l'exemple représenté sur la figure 1, le premier, et respectivement le deuxième ensemble de fonctions successives comprennent un nombre N = 3 de fonctions de navigation successives qui sont les suivantes :
- une fonction de construction de plan de vol déportée FPLND, 1 _{ND}, respectivement embarquée FPLNE, 1_{NE,}
- une fonction de construction d'une trajectoire à venir déportée TRAJD, 2_{ND}, respectivement embarquée TRAJE, 2_{NE},
- une fonction de guidage déportée GUIDD, 3_{ND}, respectivement embarquée GUIDE, 3_{NE}.

Avantageusement les fonctions de navigation successives déportées sont identiques aux fonctions de navigation successives embarquées. Ceci permet de garantir un comportement identique de l'appareil, que les fonctions de navigation soient réalisées à bord de l'aéronef ou de façon déportée.

En variante, ces fonctions sont différentes. Autrement dit, les fonctions embarquées et déportées correspondant à la même fonction mais elles ne sont pas réalisées de la même manière. Ceci est, par exemple, le cas lorsque l'aéronef présente un équipement existant pour la mission susceptible de réaliser une des fonctions de navigation. On peut utiliser cet équipement pour réaliser la fonction de navigation à bord de l'aéronef.
Les fonctions précitées sont décrites plus précisément ci-dessous :
- les fonctions de gestion de plan de vol FPLND, FPLNE, construisent une route RS (ou squelette d'une trajectoire à suivre) supposée devoir être suivie par l'aéronef à partir de données de navigation DN et/ou des consignes de vol CV; la route comprend les contraintes verticales en altitude, vitesse et temps que l'aéronef est supposé devoir respecter,
- les fonctions TRAJD, TRAJE de construction d'une trajectoire à venir T, correspondant à une estimation de la trajectoire tridimensionnelle, débutant à sa position courante PC, que l'aéronef est supposé devoir suivre pendant un intervalle de temps prédéterminé, la trajectoire étant construite à partir de la route à suivre RS et respectant les performances de l'aéronef DP,
- les fonctions de guidage, GUIDD, GUIDE calculent, à partir de la PC courante de l'aéronef et de la trajectoire tri-dimensionnelle, des consignes de guidage G (dans le plan vertical et dans le plan horizontal) qui sont des ordres de haut niveau tendant à assurer l'asservissement de l'aéronef sur les plans horizontal et vertical et en vitesse, le long de la trajectoire,
- la fonction de commande COME générant des commandes des équipements aérodynamiques de l'aéronef pour respecter les consignes de guidage.

L'exemple de système de gestion de vol selon l'invention, représenté sur la figure 1 comprend en outre :
une base de données de navigation déportée NAVDBD 5_{D} et une base de données de navigation embarquée NAVDBE, 5_{E} stockant de données de navigation DN comprenant des points géographiques, des balises radio-électriques de navigation, des segments d'interception, des segments d'altitude, des procédures de décollage, d'atterissage, des autoroutes du ciel ("runways" en anglais); ces données sont normalisées au niveau international par J'AEEC, dans le document AEEC ARINC 424,
- une base de données de données de performances déportée PERFDBD 6_{D}, et une base de données de performances embarquée PERFDBE 6_{E}, stockant des données DP relatives aux performances de l'aéronef comme des paramètres aérodynamiques, des caractéristiques aérodynamiques des moteurs de l'aéronef,
- une fonction de localisation déportée LOCNAVD 7_{D} de l'aéronef pour calculer la position courante de l'aéronef PC en latitude et longitude à partir de senseurs situés à distance de l'aéronef (par exemple radars) et une fonction de localisation embarquée LOCNAVE, 7_{E,} pour calculer la position courante PC de l'aéronef à partir de senseurs embarqués dans l'aéronef (capteurs inertiels, capteurs GPS),
- une fonction embarquée ATTE, 8_{E} de détermination de l'attitude A de l'aéronef, comprenant le tangage, le roulis, le lacet, l'incidence, les vitesses angulaires de l'aéronef, à partir d'un capteur installé à bord de l'aéronef,
- des moyens de communication avec les autorités de contrôle aérien déportés RECD, 11_{D}, et embarqués RECE, 11_{E} permettant de recevoir des consignes de vol CV depuis une autorité de contrôle aérien ATC
- une interface homme-machine MMI déportée, 12_{D} (en référence à l'expression anglo-saxonne "Man Machine Interface") permettant à un donneur d'ordre (le pilote de l'aéronef qui est déporté au sein de la station de contrôle) d'interagir avec les fonctions de navigation; cette interface homme-machine MMI comprend des moyens de saisie SD 13_{D} de consignes de vol de vol CV à destination de la fonction de gestion de plan de vol FPLN et des moyens de visualisation VISD 14_{D} d'informations issues des fonctions de navigation,
- des moyens pour générer GENE, 16_{E} à bord des consignes de vol,

La saisie des données au moyen de l'interface homme-machine par le pilote (qui est déporté au niveau de la station de contrôle) se fait en lien étroit avec la base de données qui contient tous les éléments sélectionnables possibles. Chaque fois que l'opérateur essaie d'insérer un élément, on vérifie si cet élément est présent dans la base de données de navigation. Pour certains éléments de procédures, la base de données de navigation permet de filtrer et trier les éléments sélectionnables sur ladite procédure (par exemple, lorsque l'opérateur sélectionne un aéroport, la base de données lui fournit dans une liste à choix, les pistes de décollage associées, la liste des procédures de départ standardisées associées, ...).

Les consignes de vol CV sont par exemple des contraintes, des éléments de la route à suivre, ou des paramètres qui ont une influence sur le vol, telle que la météo prédite le long du plan de vol ou dans une région donnée.

Les bases de données de navigation et de performances ne sont pas forcément dupliquées. En variante, ces bases de données ne sont hébergées uniquement au sein de la station de contrôle ou uniquement à bord.

Sur la figure 1, on a représenté les moyens pour configurer CONF, 10, le système de gestion de vol en dehors de la station de contrôle 3 et de l'aéronef 2. Ils sont par exemple installés au sein d'une autorité de contrôle aérien ATC. En variante, ces moyens 10 sont installés à bord de la station de contrôle ou de l'aéronef.

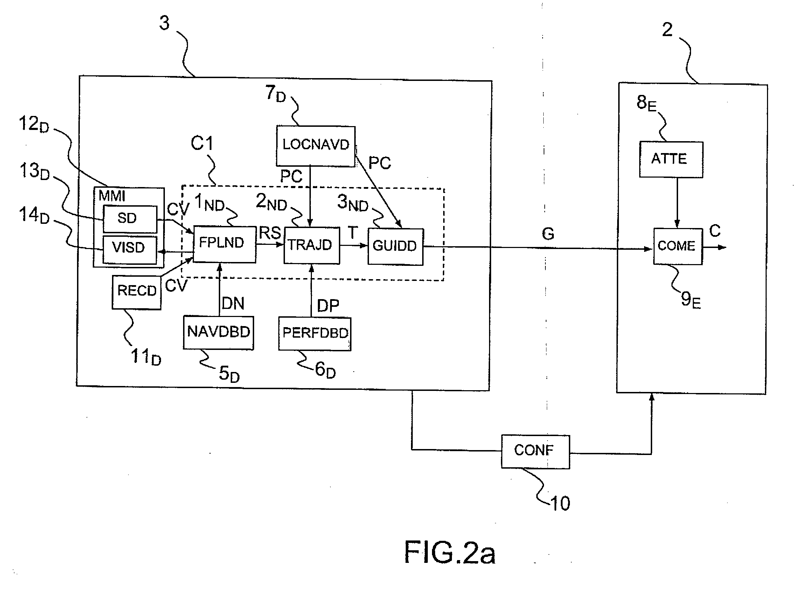

Sur les figures 2a à 2e, on a représenté différentes configurations du système de gestion de vol représenté sur la figure 1. Les différentes configurations diffèrent par la combinaison de fonctions successives choisie par les moyens de configuration 10, et éventuellement par la provenance des données et /ou des consignes de vol et/ou des fonctions de localisation utilisées.

Pour chaque configuration, on a représenté, pour plus de clarté, uniquement :
- les fonctions de navigation qui appartiennent à la combinaison choisie pour la configuration,
- la fonction de commande embarquée COME, la fonction de détermination de l'attitude ATTE, la fonction de visualisation VISD, les bases de données de navigation NAVDBE ou NAVDBD et de performances PERFDBE ou PERFDBD utilisées par la fonction de plan de vol de la combinaison,
- la ou les fonctions de localisation qui fournissent des mesures de position P aux fonctions de navigation qui appartiennent à la combinaison choisie,
- les moyens parmi SD, MMI, RECD, RECE, GENE depuis lesquels les consignes de vol CV sont transmises à la fonction de gestion de plan de vol FPLNE ou FPLND comprise dans la combinaison.

On n'a pas non plus représenté la liaison de communication 4.

Sur la figure 2a, on a représenté une première configuration. Dans cette configuration, c'est une première combinaison C1 de fonctions de navigation successives qui génère les consignes de guidage G qui sont transmises à la fonction de commande embarquée COME. Les consignes de guidage G étant générées au sein de la station de contrôle 3, elles sont transmises à l'aéronef 2 au moyen de la liaison de communication 4.

La première combinaison C1 comprend uniquement les fonctions de navigation FPLND 1_{ND}, TRAJD 2_{ND}, GUIDD 3_{ND} déportées. Aucune des fonctions de navigation embarquées ne participe à l'élaboration des consignes de guidage G. Une fonction de navigation appartenant à une combinaison de fonctions de navigation successive utilise les données issues de la fonction de navigation précédente de la combinaison.

Dans la première configuration, la fonction de construction de plan de vol FPLND, 1_{ND} déportée utilise les données de navigation stockées dans la base de données de navigation déportée NAVDBD, 5_{D}. La fonction de génération de la trajectoire à venir TRAJD déportée utilise les données de la base de données de performances déportée PERFDBD, 6_{D}.

Par ailleurs, la fonction déportée TRAJD, 2_{ND}, de construction de la trajectoire à venir et la fonction déportée de guidage GUIDD, 3_{ND} utilisent la position courante PC calculée par la fonction de localisation déportée LOCNAVD, 7_{D}.

Les consignes de vol CV utilisées par la fonction de gestion de plan de vol FPLND déportée peuvent être issues des moyens de saisie de consignes 13_{D} et/ou des moyens déportés RECD, 11_{D}, pour recevoir des consignes de vol.

Les seules fonctions qui sont réalisées à bord de l'aéronef sont la fonction de pilotage commande COME 9_{E} et la fonction de détermination de l'attitude ATTE, 8_{E}. Dans cette configuration, l'aéronef 2 ne présente aucune autonomie (configuration de niveau 0 en autonomie) vis-à-vis de la station de contrôle 3. On dit que le contrôle de l'aéronef est complètement déporté.

Avantageusement, les moyens de configuration CONF 10 du système de gestion de vol sont aptes à déterminer quelles positions courantes PC, parmi les positions courantes PC calculées par les fonctions de localisation embarquée LOCNAVE et déportée LOCNAVD, sont utilisées par la fonction de détermination de la trajectoire et respectivement par la fonction de guidage qui appartiennent à la combinaison. Ainsi, il est possible d'obtenir une variante de la première configuration décrite ci-dessus dans laquelle les fonctions déportées de guidage GUIDD et de construction de la trajectoire TRAJD utilisent la position calculée par la fonction de localisation embarquée LOCNAVE, 7_{E}. La position courante PC est alors transmise à ces fonctions depuis l'aéronef par la liaison de communication 4. L'utilisation de la position calculée par la fonction embarquée de localisation LOCNAVE permet à un aéronef de traverser plusieurs espaces aériens militaires, appartenant à différents pays, dans lesquels on ne bénéficie pas toujours de radars pour la localisation déportée.

La première configuration est principalement utilisée dans des espaces ségrégués ou dans des espaces aériens ne nécessitant pas de respecter les conditions de sécurité imposées en espace civil. En cas de panne de la liaison de communication 4 ou en cas de panne du système de localisation, l'aéronef ne présente pas la capacité de respecter les contraintes de sécurité d'un espace civil car il n'est pas capable d'élaborer lui-même des consignes de guidage G. Par contre, les calculateurs de l'aéronef ne consacrent aucune capacité de calcul (donc aucune énergie) à la réalisation des fonctions de navigation. Autrement dit, pour une réserve en énergie donnée, l'aéronef présente une grande autonomie (en termes d'énergie). Il dispose d'une capacité de calcul pour réaliser des fonctions de mission.

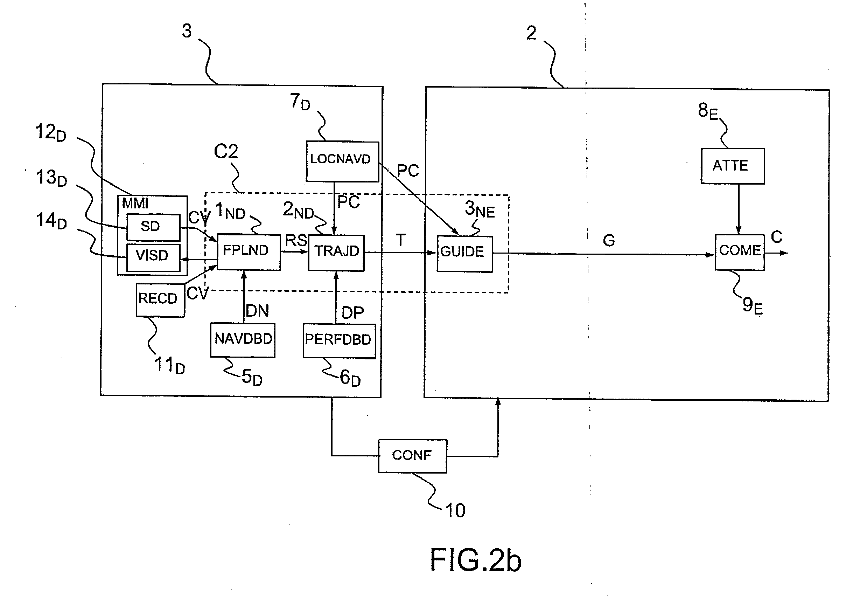

Sur la figure 2b, on a représenté une deuxième configuration du système de gestion de vol selon l'invention. La deuxième configuration diffère de la première configuration en ce qu'une deuxième combinaison C2 de fonctions de navigation successives génère les consignes de guidage G qui sont transmises à la fonction de commande embarquée COME. La deuxième combinaison C2 diffère de la première combinaison C1 en ce que la fonction de guidage déportée GUIDD 3_{ND} est remplacée par la fonction de guidage embarquée GUIDE 3_{NE}.

Sur la figure 2b, la fonction de guidage embarquée GUIDE et la fonction de construction de la trajectoire déportée TRAJD utilisent la position courante PC calculée par la fonction de localisation déportée LOCNAVD. Tout comme la première configuration, la deuxième configuration présente des variantes dans lesquelles la fonction embarquée de guidage GUIDE et la fonction déportée de construction de la trajectoire GUIDD utilisent toutes les deux la position PC calculée par la fonction de localisation embarquée LOCNAVE, 7_{E} ou bien utilisent respectivement, la position calculée par la fonction de localisation embarquée LOCNAVE et la position calculée par la fonction de localisation déportée LOCNAVD.

Dans cette dernière variante, on limite le nombre d'informations transmises entre l'aéronef et la station de contrôle ce qui favorise l'autonomie de l'aéronef vis-à-vis de la station de contrôle, notamment en cas de panne de la liaison de communication qui le relie à sa station de pilotage.

Les échanges entre l'aéronef et la station de pilotage se résument donc à la trajectoire à venir T transmise de la fonction déportée de la trajectoire TRAJD vers la fonction embarquée de guidage GUIDE, et éventuellement à la position PC de l'aéronef.

En cas de panne de la liaison de communication entre l'aéronef et la station de pilotage pendant un temps court de l'ordre de quelques minutes, l'aéronef peut continuer sa mission de manière autonome. En effet, il est capable d'établir des commandes de guidage G pour commander l'aéronef à partir de la trajectoire à venir T qui lui est transmise par la fonction déportée de construction de la trajectoire TRAJD. Il a donc la possibilité de respecter, à court terme, les conditions de sécurité qui sont imposées dans un espace civil non contrôlé ou dans un espace militaire en entrainement. La deuxième configuration est appelée configuration de niveau 1 en autonomie de l'aéronef vis-à-vis de la station de contrôle. Par ailleurs, moins d'informations transitent entre l'aéronef et la station de contrôle que dans la première configuration de sorte qu'une plus grande bande passante est disponible pour des communications non dédiées à la navigation.

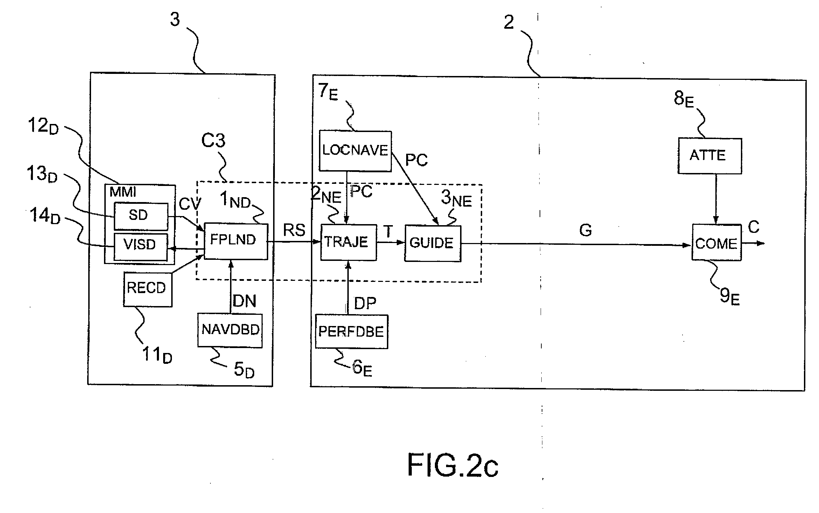

Sur la figure 2c, on a représenté une troisième configuration du système de gestion de vol selon l'invention. La troisième configuration diffère de la deuxième configuration en ce qu'elle utilise une troisième combinaison C3 de fonctions de navigation différente de la deuxième combinaison C2 en ce que la fonction déportée de construction de la trajectoire TRAJD est remplacée par la fonction embarquée de construction de la trajectoire TRAJE. La fonction embarquée TRAJE utilise notamment la route à suivre RS calculée par la fonction déportée de gestion du plan de vol FPLND 1_{ND}.

Les moyens de configuration 10 sont avantageusement aptes à déterminer, lorsque la base de données de performances est dupliquée, quelles données de performances parmi celles qui sont stockées dans les bases de données embarquée PERFDBE et déportée PERFDBD, sont utilisées par la fonction de construction de la trajectoire TRAJD ou TRAJE appartenant à la configuration choisie. Avantageusement, les moyens de configuration CONF 10 configurent le système 1 de gestion de vol de sorte que la fonction embarquée TRAJE, ou respectivement déportée TRAJD, comprise dans la combinaison, utilise les données de performances DP stockées dans la base de données de performances embarquée PERFDBE, respectivement déportée PERFDBD. Ainsi sur la figure 2c, la fonction embarquée TRAJE utilise les données stockées dans la base de données de performances embarquée PERFDBE.

Dans la troisième configuration, les fonctions embarquées d'élaboration de la trajectoire TRAJE et de guidage GUIDE utilisent la position courante PC de l'aéronef calculée par la fonction de localisation embarquée LOCNAVE. Cela permet d'éviter de transmettre la position PC de l'aéronef depuis la station de contrôle vers l'aéronef. Ainsi l'aéronef présente une bonne autonomie vis-à-vis de la station au sol en cas de panne de la liaison de communication 4. Mais les moyens de configuration 10 peuvent choisir, pour chacune de ces 2 fonctions de navigation, d'utiliser en variante la position PC issue de la fonction de localisation, soit embarquée, soit déportée.

Il est possible de transmettre à la station de pilotage 3, la portion de la trajectoire à venir calculée à bord de l'aéronef. Cette portion peut ainsi être visualisée par un opérateur au moyen des moyens de visualisation VISD. Les échanges entre l'aéronef et la station de contrôle se résument donc à l'envoi du squelette de la trajectoire RS depuis la station de contrôle 3 et en option, l'envoi, depuis l'aéronef 2, de la position PC de l'aéronef calculée par la fonction de navigation déportée ainsi qu'éventuellement la trajectoire T calculée par la fonction embarquée.

La troisième configuration permet à un aéronef de traverser des espaces aériens civils en toute sécurité. Il est en effet capable de calculer sa trajectoire T jusqu'à la fin de sa mission à partir de la route à suivre RS qui lui est transmise par la station de contrôle 3. On dit que l'aéronef présente un niveau 2 d'autonomie (supérieure au niveau 1) par rapport à la station de contrôle. En cas de perte de la communication entre l'aéronef et la station de pilotage, l'aéronef est apte à suivre une procédure obligatoire consistant à continuer sur le cap courant, rejoindre son plan de vol au point le plus proche, continuer jusqu'à l'aéroport d'arrivée en suivant le plan de vol. Le plan de vol correspond à l'ensemble des informations nécessaires pour décrire le vol et les contraintes associées que l'aéronef doit respecter. Il comprend la route à suivre, la trajectoire à suivre et les consignes de guidage.

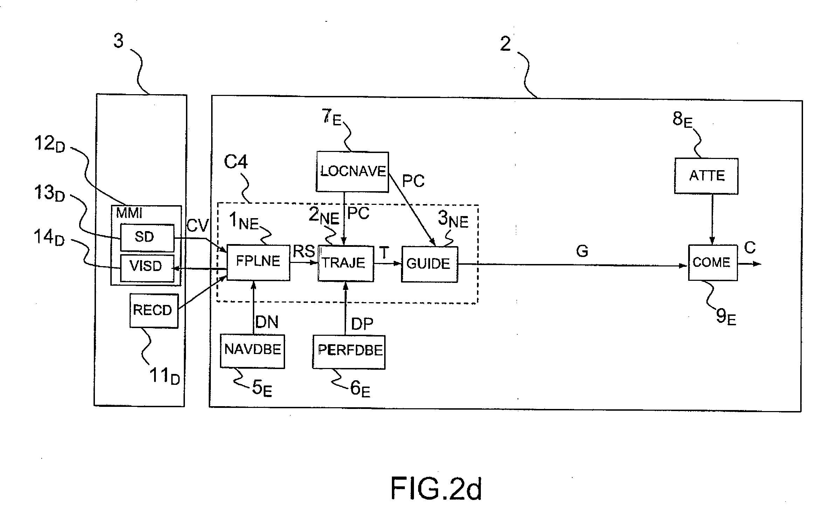

Sur la figure 2d, on a représenté une quatrième configuration du système de gestion de vol selon l'invention, présentant un troisième niveau d'autonomie supérieure aux précédents, par rapport à la station de contrôle. Cette quatrième configuration diffère de la troisième configuration représentée sur la figure 2c, en ce qu'une quatrième combinaison C4 de fonctions de navigations successives est formée. Cette quatrième combinaison C4 diffère de la troisième combinaison C3 en ce que la fonction de gestion de plan de vol déportée FPLND est remplacée par la fonction de gestion de plan de vol embarquée FPLNE.

Cette fonction FPLNE utilise des données issues de la base de données de navigation embarquée NAVDBE. Cela nécessite que la base de données de navigation soit dupliquée au moins partiellement. Les moyens de configuration 10 du système de gestion de vol sont avantageusement aptes à déterminer quelles données de navigation DN parmi celles qui sont stockées dans la base de navigation embarquée NAVDBE ou celles qui sont stockées dans la base de données de navigation déportée NAVDBD sont utilisées par la fonction de gestion de plan de vol FPLND ou FPLNE qui appartient à la combinaison. On peut donc obtenir une variante de la quatrième configuration dans laquelle la fonction de gestion de plan de vol embarquée utilise les données issues de la base de données de navigation déportée NAVDBD. Le fait d'utiliser les données issues de la base embarquée procure une plus grande autonomie à l'aéronef vis-à-vis de la station de pilotage. La fonction embarquée de gestion du plan de vol FPLNE utilise en outre des consignes de vol CV, fournies par la station de pilotage 3. Il est possible d'envoyer à la station de pilotage 3 la route RS et/ou la trajectoire et/ou la position calculées à bord.

Avantageusement, les moyens de configuration 10 du système de vol sont aptes à choisir la provenance des consignes de guidage utilisées par la fonction de gestion de plan de vol appartenant à la combinaison, parmi les moyens de communication déportés 11_{D}, avec les autorités de contrôle aérien et/ou des moyens de communication embarqués RECE 11_{E}, avec les autorités de contrôle aérien et/ou des moyens de génération de consignes de guidage embarqués 14_{E}.

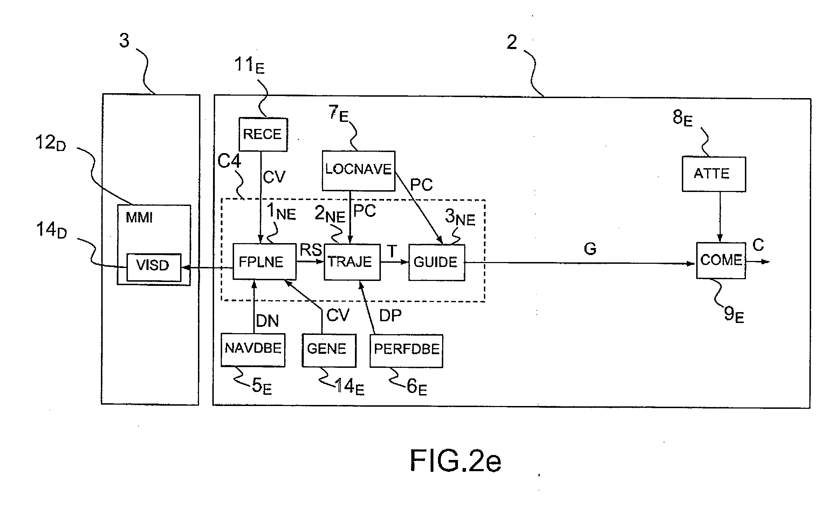

Sur la figure 2e, on a représenté une cinquième configuration du système de gestion de vol selon l'invention, appelée configuration de niveau 4 (supérieur au troisième) en autonomie de l'aéronef vis-à-vis de la station de contrôle. Cette cinquième configuration diffère de la quatrième configuration en ce que la fonction embarquée FPLNE de gestion du plan de vol utilise des consignes de vol CV générées à bord de l'aéronef par le moyen de génération GENE et/ou à partir de consignes de vol envoyées par une autorité de contrôle aérien ATC via les moyens embarqués de communication avec les autorités de contrôle aérien RECE, 11_{E}. Les consignes de vol sont, par exemple, envoyées depuis l'ATC vers l'aéronef via une liaison numérique de données.

Les moyens de génération GENE sont par exemple des moyens de surveillance du contexte ou de la mission, qui transmettent des informations à la fonction embarquée FPLNE.

L'aéronef assemble, à partir des consignes de vol CV, les éléments de procédures et de plan de vol à partir des consignes de guidage, puis construit sa trajectoire, et s'asservit sur celle-ci.

Par rapport à la configuration du niveau 3, cette configuration permet à l'aéronef de dialoguer directement avec les autorités de contrôle aérien ATC, sans passer par la station de contrôle, et donc de pouvoir continuer à répondre aux consignes de vol envoyées par l'ATC même si le lien de communication entre l'aéronef et la station de contrôle est perdu.

Avantageusement, les moyens 10 pour configurer le système de gestion de vol 1 choisissent la configuration du système de vol en fonction de performances de navigation requises. Les performances de navigation requises peuvent être exprimées en fonction d'au moins un paramètre P. Il est possible de configurer le système de vol en fonction d'au moins un paramètre de navigation et/ou d'au moins un paramètre de certification et/ou d'au moins un paramètre économique et technique.

On va maintenant lister de manière non exhaustive les différents paramètres ainsi que la configuration, exprimée en niveau d'autonomie j, avec j=0 à 4 qui est suffisante, nécessaire ou préférentiellement choisie pour différentes valeurs du paramètre.

On peut configurer le système de navigation en fonction d'au moins un paramètre de navigation pris parmi :
■ la nature des espaces aériens supposés devoir être traversés par l'aéronef :
   - si l'aéronef ne traverse pas d'espace aérien non-ségrégué, un niveau d'autonomie 0 à 2 est suffisant,
   - si l'aéronef traverse un espace aérien non-ségrégué non contrôlé (i.e. dans lequel s'appliquent des règles de vol à vue pour la surveillance des autres aéronefs), il est préférable de choisir au minimum le niveau 2 d'autonomie pour assurer un délai raisonnable de prise en compte des conflits potentiels avec les autres avions,
   - si l'aéronef traverse un espace non-ségrégué contrôlé (i.e. dans lequel l'aéronef doit être capable de répondre rapidement aux consignes des autorités de contrôle aérien, un niveau 3 voire 4 est nécessaire (la variante du niveau 4 dans laquelle la fonction de gestion de vol utilise des consignes de vol qui lui sont transmises par les autorités de peut être nécessaire si la réactivité attendue est forte);
■ le type d'aéronef relativement à l'autonomie requise vis-à-vis de la station de pilotage :
   - pour un Micro Drone (drone présentant une faible endurance, une très faible autonomie, une faible masse et un faible coût), un niveau d'autonomie 0 ou 1 est préférable,
   - pour un Drone tactique (drone présentant une faible endurance, une autonomie moyenne de 1 à 3 h, une masse moyenne et un faible coût), un niveau d'autonomie 0 à 2 est préférable,
   - pour un Drone MALE (drone présentant une endurance moyenne, une autonomie moyenne de 4 à 10 h, une masse importante et un coût élevé), un niveau d'autonomie compris entre 1 et 4 est préférable,
   - pour un Drone HALE (drone présentant une endurance forte, une forte autonomie, c'est-à-dire supérieure à 12 h, une masse importante, un coût très élevé) un niveau d'autonomie 2 à 4 est préférable :
■ la durée de vie requise c'est à dire le drone liée au coût du drone (plus le drone est coûteux, plus l'exigence de le retrouver intact à la fin de sa mission est forte, plus le niveau d'autonomie devra être important),
■ le temps de réponse de la chaîne station de contrôle / aéronef (plus ce temps de réponse est de l'aéronef vis-à-vis de la station de contrôle sera élevé, plus on aura tendance à choisir un niveau d'autonomie élevé),
■ le type d'espace aérien traversé relativement aux performances de navigation requises dans cet espace (c'est-à-dire relativement à la précision avec laquelle il est nécessaire que l'aéronef suive son plan de vol); plus on exigera de bonnes performances de navigation, plus on choisira un niveau d'autonomie élevé,
■ la nature des fonctionnalités et procédures que l'aéronef doit pouvoir effectuer, par exemple, un aéronef qui est équipé d'une fonction embarquée de retour autonome au point de départ, c'est-à-dire qui embarque un plan de vol de retour prédéfini et non modifiable pour revenir en lieu sûr en cas de problème doit être capable, en cas de perte de la communication avec la station de contrôle, de construire une trajectoire à partir de ce plan de vol et d'établir de commandes de guidage à partir de celui-ci, ce qui nécessite la présence, à bord de l'aéronef, des fonctions construction de la trajectoire et de guidage de l'aéronef, le niveau 4 d'autonomie est requis.

Il est également possible de configurer le système de vol à partir d'au moins un paramètre de certification relatif au niveau de sécurité exigé pour le vol pris parmi :
■ le type d'aéronef (dans la classification des aéronefs) :
   - aéronef faible masse, classe « very light jets », ULM ... un niveau d'autonomie 0 ou 1 est préférable,
   - aéronef de classe aviation d'affaire ou légère, un niveau d'autonomie 1 à 3 est préférable,
   - aéronef de masse élevée, un niveau 1 à 4 peut être choisi;
■ le niveau de performance des équipements de Communication et /ou de Surveillance de l'aéronef (le niveau requis pour la fonction de navigation doit compléter les niveaux des équipements embarqués de surveillance et de communication) :
   - si le niveau de performances est élevé (garantie que la perte de communication est « improbable ») un niveau 0/1 est suffisant,
   - si le niveau de performances est faible, un niveau 2 à 4 sera nécessaire pour limiter la dépendance du pilotage de l'aéronef vis-à-vis de la liaison de communication;
■ le temps de réponse de la station de contrôle (pilote au sol) vis à vis des exigences de contrôle aérien : plus le temps de réponse est important, plus le niveau d'autonomie requis est élevé.

Il est également possible de configurer le système de vol à partir d'au moins un paramètre technique t économique pris parmi :
■ la masse d'emports maximale d'équipements dédiés à la navigation dans les espaces aériens non-ségrégués : si une masse d'emport supplémentaire est autorisée (ressources de mémoire ou de processeur plus importantes), on peut augmenter le niveau d'autonomie,
■e potentiel énergétique de l'aéronef (plus il y a d'énergie disponible pour les fonctions de navigation, plus on peut augmenter le niveau d'autonomie),
■ coût de l'emport par rapport à la probabilité de perte de l'appareil (sans dégât pour les autres utilisateurs des espaces aériens) : même classement pour le coût du drone.

Les paramètres listés précédemment peuvent être prédéterminés. Ils sont fixés pour une mission donnée, ou pour un aéronef donné. Autrement dit, les performances de navigation requises restent les mêmes pour une mission donnée ou pour un aéronef donné. En variante, au moins un de ces paramètres présente une valeur variable pendant une mission donnée. Autrement dit, les performances requises sont variables pendant la mission de l'aéronef. Les moyens de configuration CONF 10 configurent avantageusement le système de gestion de vol de façon dynamique en fonction de l'évolution de la valeur des paramètres pendant le vol. Le système est avantageusement équipé d'un système de surveillance des performances de navigation requises. Autrement dit, le système est avantageusement équipé de moyens de surveillances de la (ou des) valeur(s) du (ou des) paramètre(s) variable(s).

Ainsi, un aéronef qui décolle d'un espace aérien nécessitant un fort niveau de sécurité peut activer une fonction de niveau 3 ou 4 pour assurer un suivi fiable de la route, même en cas de panne de communication. Cet aéronef arrivant ensuite sur un théâtre d'opérations (zone militaire) peut repasser en niveau 0, la mission étant déroulée par un autre système (système de mission) n'ayant pas de contrainte particulière vis à vis des espaces aériens non ségrégués.

On peut choisir un niveau minimal d'autonomie requis pour assurer le niveau de sécurité minimal requis dans l'espace traversé. De cette manière, l'aéronef dépense toujours le minimum d'énergie pour réaliser les fonctions de navigation. Par ailleurs, les ressources en énergie mobilisées pour réaliser les fonctions de navigation sont minimales. Ainsi, le système de gestion de vol selon l'invention permet à un aéronef de traverser des espaces civils et militaires sans toutefois diminuer considérablement son autonomie.

Par exemple, un aéronef de type Drone tactique déployé uniquement en théâtre d'opération hostile ou en zone urbaine à faible altitude peut avoir un degré de niveau 0 ou 1. Un aéronef plus puissant, devant effectuer une mission plus longue en décollant de pistes civiles, et en traversant des espaces et niveaux de vols non ségrégués devra au minimum être de niveau 3.

## Revendications

1. Système de gestion de vol (1) d'un aéronef (2) sans pilote à bord relié à une station de contrôle (3) par des moyens de communication (4), ledit système de gestion de vol (1) comprenant :
- un premier ensemble (D) d'un nombre N de fonctions de navigation successives (i_{ND} avec i= 1,...N) déportées au sein de la station de contrôle,
- une fonction de commande COME (9_{E}) embarquée à bord de l'aéronef, élaborant, à partir de consignes de guidage G, des commandes destinées à commander l'aéronef pour qu'il respecte les consignes de guidage G,
**caractérisé en ce qu'**il comporte en outre,
- un deuxième ensemble (E), d'un nombre N de fonctions de navigation successives (i_{NE}, avec i= 1,..., N) embarquées à bord de l'aéronef,
- des moyens de configuration CONF (10), aptes à réaliser une combinaison d'un nombre N de fonctions successives, chacune des fonctions successives étant choisie parmi le premier et le deuxième ensembles (D, E),
ladite combinaison de fonctions successives générant les consignes de guidage G transmises à la fonction de commande embarquée COME (9_{E}).

2. Système de gestion de vol selon la revendication précédente, dans lequel le premier, et respectivement le deuxième, ensembles de fonctions successives comprennent les trois fonctions de navigation successives suivantes :
- une fonction de construction de plan de vol déportée FPLND (1_{ND}), et respectivement embarquée FPLNE (1_{NE}),
- une fonction de construction d'une trajectoire à venir déportée TRAJD (2_{ND}), et respectivement embarquée TRAJE (2_{NE}),
- une fonction de guidage déportée GUIDD (3_{ND}), et respectivement embarquée GUIDE (3_{NE}).

3. Système de gestion de vol selon l'une quelconque des revendications précédentes, comprenant une base de données de performances embarquée PERFDBE (6_{E}) à bord de l'aéronef et une base de données de performances déportée PERFDBD (6_{D})

4. Système de gestion de vol selon l'une quelconque des revendications précédentes, comprenant, une base de données de navigation déportée NAVDBD et une base de données de navigation embarquée NAVDBE (5_{E}) stockant des données de navigation.

5. Système de gestion de vol selon la revendication précédente en ce qu'elle dépend de la revendication 2, dans lequel les moyens de configuration (10) du système de vol sont aptes à choisir la provenance consignes de guidage utilisées par la fonction de gestion de plan de vol appartenant à la combinaison parmi des moyens déportés de communication (11_{D}) avec les autorités de contrôle aérien et/ou des moyens embarqués de communication (11_{E}) avec les autorités de contrôle aérien et/ou des moyens de génération de consignes de guidage embarqués (14_{E}).

6. Système de gestion de vol selon la revendication précédente, dans lequel les moyens de configuration (10) du système configurent le système de vol en fonction de performances de navigation requises.

7. Système de gestion de vol selon la revendication précédente, dans lequel les performances de navigation requises dépendent d'au moins un paramètre de navigation et/ou d'au moins un paramètre de certification et/ou d'au moins un paramètre économique et technique.

8. Système de gestion de vol selon l'une quelconque des revendications 6 ou 7, dans lequel les performances de navigation requises sont prédéterminées.

9. Système de gestion de vol selon l'une quelconque des revendications 6 ou 7, dans lequel les performances de navigation requises sont variables pendant une mission de l'aéronef.

10. Système de gestion de vol selon l'une quelconque des revendications précédentes, dans lequel, pour au moins un numéro d'ordre i compris entre 1 et N, la fonction de navigation déportée de numéro d'ordre i (i_{ND}) est égale à la fonction embarquée de numéro d'ordre i (i_{NE}).

## Patentansprüche

1. Flugmanagementsystem (1) für ein unbemanntes Luftfahrzeug (2), das durch Kommunikationsmittel (4) mit einer Kontrollstation (3) verbunden ist, wobei das Flugmanagementsystem (1) Folgendes umfasst:
- einen ersten Satz (D) mit einer Anzahl N von sukzessiven Fernnavigationsfunktionen (i_{ND}, wobei i = 1,...N) in der Kontrollstation,
- eine Befehlsfunktion COME (9_{E}) an Bord des Luftfahrzeugs, die auf der Basis von Leitanweisungen G Befehle zum Steuern des Luftfahrzeugs entwickelt, so dass es den Leitanweisungen G folgt,
**dadurch gekennzeichnet, dass** es ferner Folgendes umfasst:
- einen zweiten Satz (E) mit einer Anzahl N von sukzessiven Navigationsfunktionen (i_{NE}, wobei i = 1,...N) an Bord des Luftfahrzeugs;
- Konfigurationsmittel CONF (10) zum Ausführen einer Kombination aus einer Anzahl N von sukzessiven Funktionen, wobei jede der sukzessiven Funktionen aus dem ersten und dem zweiten Satz (D, E) ausgewählt ist,
wobei die Kombination von sukzessiven Funktionen die zur Befehlsfunktion COME (9_{E}) an Bord übertragenen Leitanweisungen G erzeugt.

2. Flugmanagementsystem nach dem vorherigen Anspruch, wobei der erste und der zweite Satz von sukzessiven Funktionen jeweils die folgenden drei sukzessiven Navigationsfunktionen umfassen:
- jeweils eine Fern-FPLND-(1_{ND})- und eine Bord-FPLNE-(1_{NE})-Flugplanerstellungsfunktion;
- jeweils eine Fern-TRAJD-(2_{ND})- und eine Bord-TRAJE-(2_{NE})-Zukunftsflugbahnerstellungsfunktion;
- jeweils eine Fern-GUIDD-(3_{ND})- und eine Bord-GUIDE-(3_{NE})-Leitfunktion.

3. Flugmanagementsystem nach einem der vorherigen Ansprüche, das eine Bord-Leistungsdatenbank PERFDBE (6_{E}) an Bord des Luftfahrzeugs und eine Fern-Leistungsdatenbank PERFDBD (6_{D}) umfasst.

4. Flugmanagementsystem nach einem der vorherigen Ansprüche, das eine Fernnavigationsdatenbank NAVDBD und eine Bordnavigationsdatenbank NAVDBE (5_{E}) umfasst, die Navigationsdaten speichern.

5. Flugmanagementsystem nach dem vorherigen Anspruch in Abhängigkeit von Anspruch 2, wobei die Mittel (10) zum Konfigurieren des Flugsystems den Ursprung der von der zur Kombination gehörenden Flugplanmanagementfunktion benutzten Leitanweisungen aus Fernkommunikationsmitteln (11_{D}) mit den Flugverkehrskontrollbehörden und/oder Bordkommunikationsmitteln (11_{E}) mit den Flugverkehrskontrollbehörden und/oder Bordmitteln zum Erzeugen von Leitanweisungen (14_{E}) auswählen können.

6. Flugmanagementsystem nach dem vorherigen Anspruch, wobei das Mittel (10) zum Konfigurieren des Systems das Flugsystem in Abhängigkeit von den benötigten Navigationsleistungen konfiguriert.

7. Flugmanagementsystem nach dem vorherigen Anspruch, wobei die benötigten Navigationsleistungen von wenigstens einem Navigationsparameter und/oder von wenigstens einem Zertifikationsparameter und/oder von wenigstens einem wirtschaftlichen und technischen Parameter abhängen.

8. Flugmanagementsystem nach einem der Ansprüche 6 oder 7, wobei die benötigten Navigationsleistungen vorbestimmt sind.

9. Flugmanagementsystem nach einem der Ansprüche 6 oder 7, wobei die benötigten Navigationsleistungen während einer Mission des Luftfahrzeugs variabel sind.

10. Flugmanagementsystem nach einem der vorherigen Ansprüche, wobei, für wenigstens eine Anzahl der Größenordnung i zwischen 1 und N, die Fernnavigationsfunktion der Zahl der Größenordnung i (i_{ND}) gleich der Bordfunktion der Zahl der Ordnung i (i_{NE}) ist.

## Claims

1. A flight management system (1) for an unmanned aircraft (2) linked to a control station (3) by communication means (4), said flight management system (1) comprising:
- a first set (D) of a number N of remote successive navigation functions (i_{ND} with i = 1,...N) within said control station,
- a command function COME (9_{E}) on board said aircraft developing, on the basis of guidance instructions G, commands designed to control said aircraft so that it follows the guidance instructions G,
**characterised in that** it further comprises,
- a second set (E) of a number N of successive navigation functions (i_{NE} with i = 1,...N) on board said aircraft;
- configuration means CONF (10) designed to carry out a combination of a number N of successive functions, each of the successive functions being selected from said first and second sets (D, E),
with said combination of successive functions generating the guidance instructions G transmitted to the on-board command function COME (9_{E}).

2. The flight management system according to the preceding claim, wherein said first and second sets of successive functions, respectively, comprise the following three successive navigation functions:
- a remote FPLND (1_{ND}) and on-board FPLNE (1_{NE}) flight plan construction function, respectively;
- a remote TRAJD (2_{ND}) and on-board TRAJE (2_{NE}) future trajectory construction function, respectively;
- a remote GUIDD (3_{ND}) and on-board GUIDE (3_{NE}) guidance function, respectively.

3. The flight management system according to any one of the preceding claims, comprising an on-board performance database PERFDBE (6_{E}) on board said aircraft and a remote performance database PERFDBD (6_{D}).

4. The flight management system according to any one of the preceding claims, comprising a remote navigation database NAVDBD and an on-board navigation database NAVDBE (5_{E}) storing navigation data.

5. The flight management system according to the preceding claim as dependent on claim 2, wherein said means (10) for configuring the flight system are designed to select the origin of the guidance instructions used by the flight plan management function belonging to the combination from among remote communication means (11_{D}) with the air traffic control authorities and/or on-board communication means (11_{E}) with the air traffic control authorities and/or on-board means for generating guidance instructions (14_{E}).

6. The flight management system according to the preceding claim, wherein said means (10) for configuring the system configure the flight system as a function of required navigation performance.

7. The flight management system according to the preceding claim, wherein the required navigation performance depends on at least one navigation parameter and/or at least one certification parameter and/or at least one economic and technical parameter.

8. The flight management system according to any one of claims 6 or 7, wherein the required navigation performance is predetermined.

9. The flight management system according to any one of claims 6 or 7, wherein the required navigation performance is variable during a mission of said aircraft.

10. The flight management system according to any one of the preceding claims, wherein, for at least one number of the order i between 1 and N, the remote navigation function of the number of the order i (i_{ND}) is equal to the on-board function of the number of the order i (i_{NE}).
